# EUROPEAN PATENT APPLICATION

(11) **EP 4 202 653 A1**
(43) Date of publication of application: **28.06.2023**
(21) Application number: 22205710.1
(22) Date of filing: 07.11.2022
(51) Int. Cl.: G06F 9/30

(54) **CONVERSION INSTRUCTIONS**

(30) Priority: 23.12.2021 US 202117560547
(71) Applicant: Intel Corporation, Santa Clara, CA 95054 (US)
(72) Inventor: Valentine, Robert, 36054 Kiryat Tivon (IL); Wong, Wing Shek, Austin, 78733 (US); Combs, Jonathan, Austin, 78749 (US); Charney, Mark, Lexington, 02421 (US)
(74) Representative: Goddar, Heinz J.

(57) **Abstract**

Techniques for data type conversion using an instruction are described. An exemplary instruction includes fields for an opcode, an identification of source operands, and an identification of destination operand, wherein the opcode is to indicate execution circuitry and/or memory access circuitry is to convert 32-bit floating point values from the identified source operands into 16-bit floating point values and store 16-bit floating point values in data element positions of the identified destination operand.

## Description

### BACKGROUND

In recent years fused-multiply-add (FMA) units with lower-precision multiplications and higher-precision accumulation have proven useful in machine learning/artificial intelligence applications, most notably in training deep neural networks due to their extreme computational intensity. Compared to classical IEEE-754 32-bit (FP32) and 64-bit (FP64) arithmetic, this reduced precision arithmetic can naturally be sped up disproportional to their shortened width.

### BRIEF DESCRIPTION OF DRAWINGS

Various examples in accordance with the present disclosure will be described with reference to the drawings, in which:
**FIG. 1** illustrates different floating point representation formats.
**FIG. 2** illustrates an exemplary execution of single decoded instruction to convert FP32 values from two sources into a FP16 values and store the FP16 values into data elements positions of a destination.
**FIG. 3** illustrates an exemplary execution of single decoded instruction to convert FP32 values from two sources into a BF16 values and store the BF16 values into data elements positions of a destination.
**FIG. 4** illustrates an exemplary execution of single decoded instruction to convert FP32 values into a BF16 values and store the BF16 values into data elements positions of a destination.
**FIG. 5** illustrates examples of hardware to process an instruction such as a VCVTNE2PS2PH, VCVTNEPS2BF16, and/or VCVTNE2PS2BF16 instruction.
**FIG. 6** illustrates an example of method to process a VCVTNEPS2BF16 instruction.
**FIG. 7** illustrates examples of instruction encodings for the VCVTNEPS2BF16 instruction.
**FIG. 8** illustrates examples of instruction pseudocode for the VCVTNEPS2BF16 instruction.
**FIG. 9** illustrates an example of method to process a VCVTNE2PS2PH or VCVTNE2PS2BF16 instruction.
**FIG. 10** illustrates examples of instruction encodings for the VCVTNE2PS2PH instruction.
**FIG. 11** illustrates examples of instruction pseudocode for the VCVTNE2PS2PH instruction.
**FIG. 12** illustrates examples of an exemplary system.
**FIG. 13** illustrates a block diagram of examples of a processor that may have more than one core, may have an integrated memory controller, and may have integrated graphics.
**FIG. 14(A)** is a block diagram illustrating both an exemplary in-order pipeline and an exemplary register renaming, out-of-order issue/execution pipeline according to examples.
**FIG. 14(B)** is a block diagram illustrating both an exemplary example of an in-order architecture core and an exemplary register renaming, out-of-order issue/execution architecture core to be included in a processor according to examples.
**FIG. 15** illustrates examples of execution unit(s) circuitry, such as execution unit(s) circuitry of FIG. 14(B).
**FIG. 16** is a block diagram of a register architecture according to some examples.
**FIG. 17** illustrates examples of an instruction format.
**FIG. 18** illustrates examples of an addressing field.
**FIG. 19** illustrates examples of a first prefix.
**FIGS. 20(A)****-(D)** illustrate examples of how the R, X, and B fields of the first prefix 1701(A) are used.
**FIGS. 21(A)****-(B)** illustrate examples of a second prefix.
**FIG. 22** illustrates examples of a third prefix.
**FIG. 23** illustrates a block diagram contrasting the use of a software instruction converter to convert binary instructions in a source instruction set to binary instructions in a target instruction set according to examples.

### DETAILED DESCRIPTION

The present disclosure relates to methods, apparatus, systems, and non-transitory computer-readable storage media for converting data elements in response to an instruction.

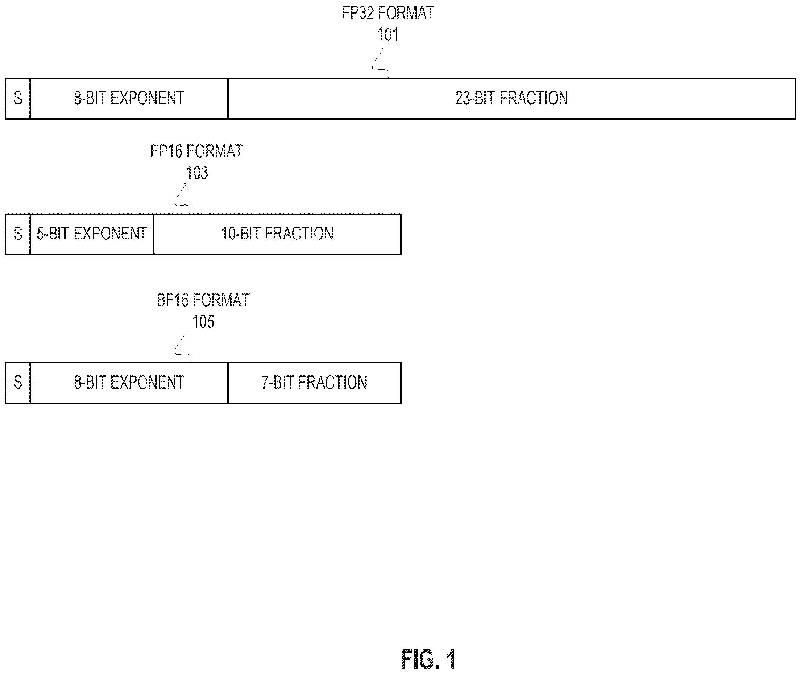

**FIG. 1** illustrates different floating point representation formats. In this illustration, the formats are in little endian format, however, in some examples, a big endian format is used. The FP32 format 101 has a sign bit (S), an 8-bit exponent, and a 23-bit fraction (a 24-bit mantissa that uses an implicit bit). The FP16 format 103 has a sign bit (S), a 5-bit exponent, and a 10-bit fraction. The BF16 format 105 has a sign bit (S), an 8-bit exponent, and a 7-bit fraction.

In contrast to the IEEE 754-standardized 16-bit (FP16) variant, BF16 does not compromise on range when being compared to FP32. FP32 numbers have 8 bits of exponent and 24 bits of mantissa (including the one implicit). BF16 cuts 16 bits from the 24-bit FP32 mantissa to create a 16-bit floating point datatype. In contrast FP16, roughly halves the FP32 mantissa to 10 explicit bits and reduces the exponent to 5 bits to fit the 16-bit datatype envelope.

Although BF16 offers less precision than FP16, it is typically better suited to support deep learning tasks. FP16's range is not enough to accomplish deep learning training out-of-thebox due to its limited range. BF16 does not suffer from this issue and the limited precision may actually help to generalize the learned weights in the neural net training task. In other words, lower precision can be seen as offering a built-in regularization property.

Not all processors have support for all data types. For example, in some examples, the execution circuitry detailed below does not have FP16 and/or BF16 execution support. In other words, the execution circuitry cannot natively work with these formats and the conversion to FP32 allows for the execution circuitry to be able to handle previously unsupported data types. As such, there is not the need to build out support for FP16 and/or BF16 which takes up area and may consume more power. Detailed herein are examples of instructions, and their support, which convert FP32 data elements of two sources into FP16 or BF16 data elements and store that FP16 or BF16 data elements into a destination.

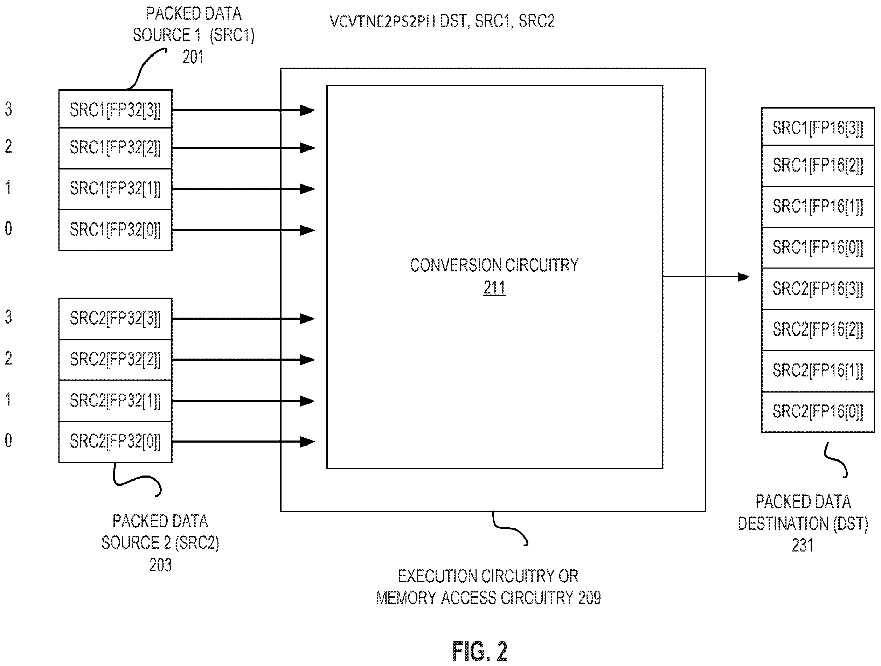

**FIG. 2** illustrates an exemplary execution of single decoded instruction to convert FP32 values from two sources into a FP16 values and store the FP16 values into data elements positions of a destination. Note that in some examples, this single instruction of a first instruction set architecture is converted into one or more instructions of a second, different instruction set architecture, however, the result will be the same.

An example of a format for an instruction to convert FP32 values from two sources into a FP16 values and store the FP16 values into data elements positions of a destination is VCVTNE2PS2PH DESTINATION, SOURCE 1, SOURCE 2. In some examples, VCVTNE2PS2PH is the opcode mnemonic of the instruction. DESTINATION is one or more fields used to indicate a packed data destination register operand. SOURCE 1 is one or more fields used to indicate a first source such as packed data registers and/or memory location. SOURCE 2 is one or more fields used to indicate a second source such as packed data registers and/or memory location. Note that PS in the opcode mnemonic represents single precision or FP32. Additionally, note that a different mnemonic may be used, but VCVTNE2PS2PH is used in this discussion as a shortcut. In some examples, the source locations are provided using at least R/M field 1846 (and in some examples, using the MOD field 1842) and the destination register is provided using register field 1844. In some examples, a prefix is used to provide one of the source locations such as using VVVV of a second or third prefix detailed below.

As shown, the execution of a decoded VCVTNE2PS2PH instruction causes a FP32 data elements from two packed data sources 201 and 203 to be converted by conversion circuitry 211 of execution circuitry 213 or memory access circuitry 215 into the FP16 data elements. In this example, the converted FP16 data elements from source 2 203 are stored in corresponding lower data element positions of the destination 231 and converted FP16 data elements from source 1 201 are stored in corresponding upper data element positions of the destination 231. Note that this order of storage may be modified, such as having the converted data elements from source 1 201 being stored in the lower data element positions of the packed data destination 231, etc. In some examples, the execution of this instruction uses a "round to nearest (even)" rounding mode. In some examples, output denormals are always flushed to zero and input denormals are always treated as zero.

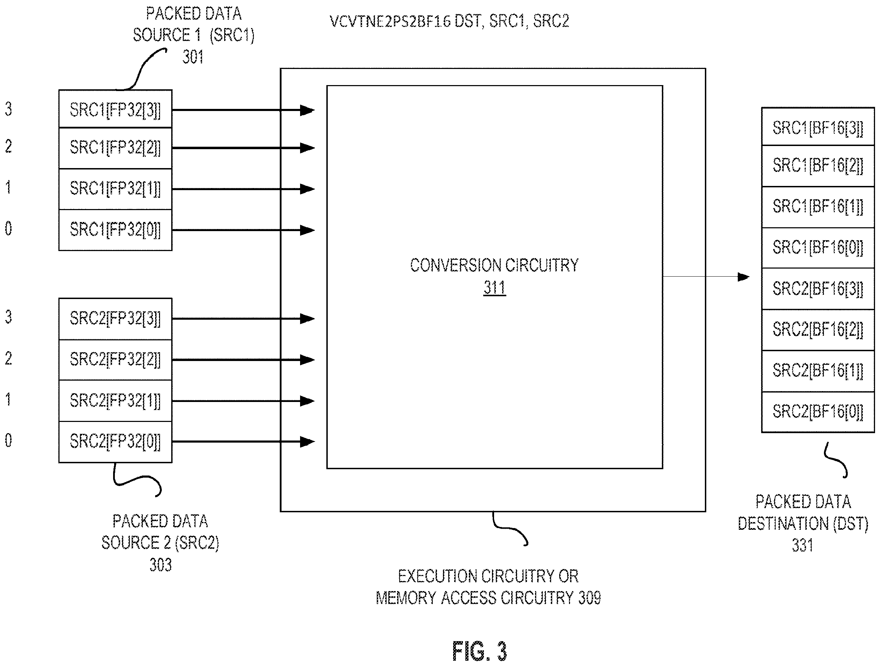

**FIG. 3** illustrates an exemplary execution of single decoded instruction to convert FP32 values from two sources into a BF16 values and store the BF16 values into data elements positions of a destination. Note that in some examples, this single instruction of a first instruction set architecture is converted into one or more instructions of a second, different instruction set architecture, however, the result will be the same.

An example of a format for an instruction to convert FP32 values from two sources into a BF16 values and store the BF16 values into data elements positions of a destination is VCVTNE2PS2BF16 DESTINATION, SOURCE 1, SOURCE 2. In some examples, VCVTNE2PS2BF16 is the opcode mnemonic of the instruction. DESTINATION is one or more fields used to indicate a packed data destination register operand. SOURCE 1 is one or more fields used to indicate a first source such as packed data registers and/or memory location. SOURCE 2 is one or more fields used to indicate a second source such as packed data registers and/or memory location. Note that PS in the opcode mnemonic represents single precision or FP32. Additionally, note that a different mnemonic may be used, but VCVTNE2PS2BF16 is used in this discussion as a shortcut. In some examples, the source locations are provided using at least R/M field 1846 (and in some examples, using the MOD field 1842) and the destination register is provided using register field 1844. In some examples, a prefix is used to provide one of the source locations such as using VWV of a second or third prefix detailed below.

As shown, the execution of a decoded VCVTNE2PS2BF16 instruction causes a FP32 data elements from two packed data sources 301 and 303 to be converted by conversion circuitry 311 of execution circuitry 313 or memory access circuitry 315 into the BF16 data elements. In this example, the converted BF16 data elements from source 2 303 are stored in corresponding lower data element positions of the destination 331 and converted BF16 data elements from source 1 301 are stored in corresponding upper data element positions of the destination 331. Note that this order of storage may be modified, such as having the converted data elements from source 1 301 being stored in the lower data element positions of the packed data destination 331, etc. In some examples, the conversion is to cut off the 16 least significant bits of the fraction of the FP32 value.

In some examples, the execution of this instruction uses a "round to nearest (even)" rounding mode. In some examples, output denormals are always flushed to zero and input denormals are always treated as zero.

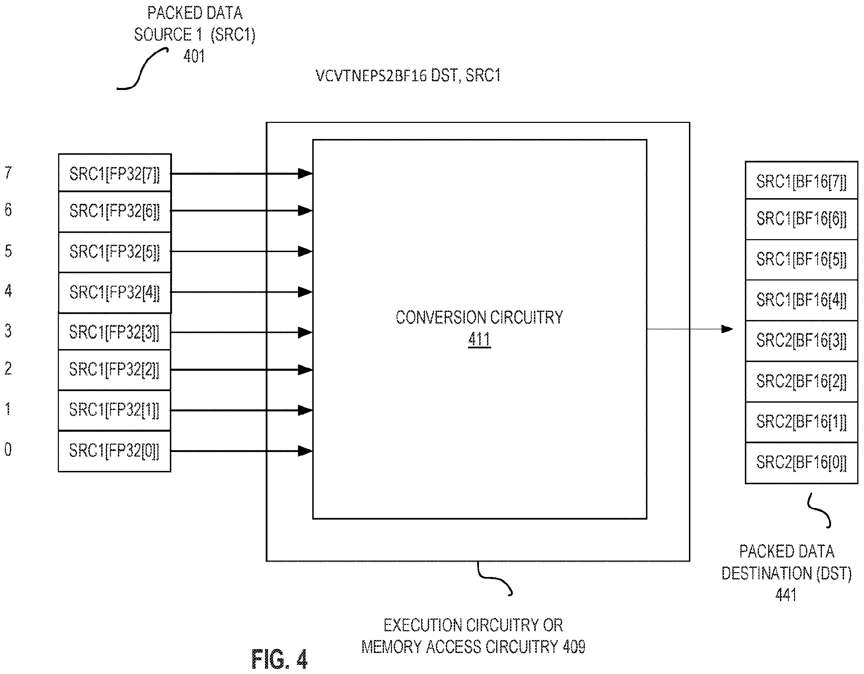

**FIG. 4** illustrates an exemplary execution of single decoded instruction to convert FP32 values from a source into a BF16 values and store the BF16 values into data elements positions of a destination. Note that in some examples, this single instruction of a first instruction set architecture is converted into one or more instructions of a second, different instruction set architecture, however, the result will be the same.

An example of a format for an instruction to convert FP32 values from two sources into a BF16 values and store the BF16 values into data elements positions of a destination is VCVTNEPS2BF16 DESTINATION, SOURCE 1. In some examples, VCVTNEPS2BF16 is the opcode mnemonic of the instruction. DESTINATION is one or more fields used to indicate a packed data destination register operand. SOURCE 1 is one or more fields used to indicate a first source such as packed data registers and/or memory location. Note that PS in the opcode mnemonic represents single precision or FP32. Additionally, note that a different mnemonic may be used, but VCVTNEPS2BF16 is used in this discussion as a shortcut. In some examples, the source locations are provided using at least R/M field 1846 (and in some examples, using the MOD field 1842) and the destination register is provided using register field 1844.

As shown, the execution of a decoded VCVTNEPS2BF16 instruction causes FP32 data elements from a packed data sources 401 to be converted by conversion circuitry 411 of execution circuitry 414 or memory access circuitry 415 into BF16 data elements. In some examples, the conversion is to cut off the 16 least significant bits of the fraction of the FP32 value. However, that may not always be the case.

In some examples, the execution of this instruction uses a "round to nearest (even)" rounding mode. In some examples, output denormals are always flushed to zero and input denormals are always treated as zero.

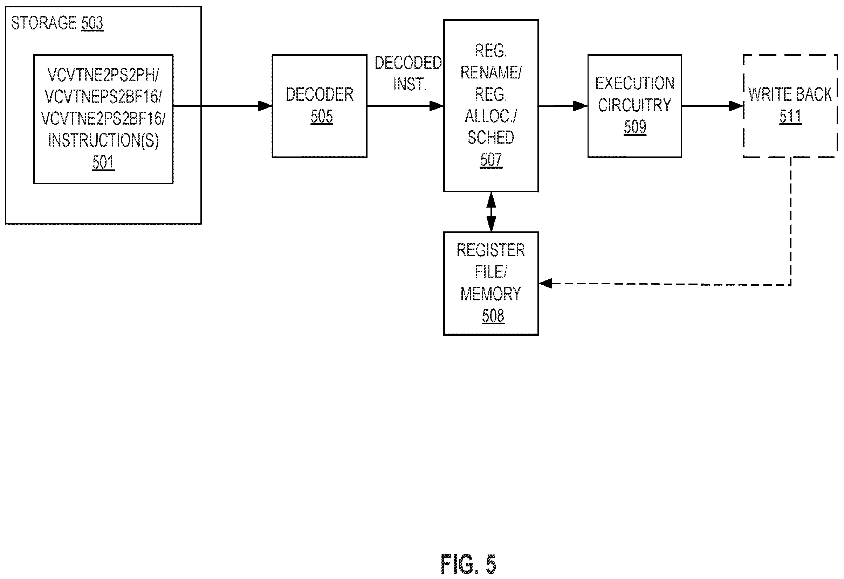

FIG. 5 illustrates examples of hardware to process an instruction such as a VCVTNE2PS2PH, VCVTNEPS2BF16, and/or VCVTNE2PS2BF16 instruction. As illustrated, storage 503 stores a VCVTNE2PS2PH, VCVTNEPS2BF16, and/or VCVTNE2PS2BF16 instruction 501 to be executed.

The instruction 501 is received by decode circuitry 505. For example, the decode circuitry 505 receives this instruction from fetch logic/circuitry. The instruction includes fields for an opcode, first and second sources, and a destination. In some examples, the sources and destination are registers, and in other examples one or more are memory locations. In some examples, the opcode details which arithmetic operation is to be performed.

More detailed examples of at least one instruction format will be detailed later. The decode circuitry 505 decodes the instruction into one or more operations. In some examples, this decoding includes generating a plurality of micro-operations to be performed by execution circuitry (such as execution circuitry 509). The decode circuitry 505 also decodes instruction prefixes.

In some examples, register renaming, register allocation, and/or scheduling circuitry 507 provides functionality for one or more of: 1) renaming logical operand values to physical operand values (e.g., a register alias table in some examples), 2) allocating status bits and flags to the decoded instruction, and 3) scheduling the decoded instruction for execution on execution circuitry out of an instruction pool (e.g., using a reservation station in some examples).

Registers (register file) and/or memory 508 store data as operands of the instruction to be operated on by execution circuitry 509. Exemplary register types include packed data registers, general purpose registers, and floating-point registers.

Execution circuitry 509 executes the decoded instruction according to the opcode. Exemplary detailed execution circuitry is shown in FIGS. 2, 3, 4, 14, etc. The execution of a decoded VCVTNE2PS2PH instruction causes the execution circuitry to convert FP32 values from two sources into FP16 values and store the FP16 values in data elements of a destination. The execution of a decoded VCVTNE2PS2BF16 instruction causes the execution circuitry to convert FP32 values from two sources into BF16 values and store the BF16 values in data elements of a destination. The execution of a decoded VCVTNEPS2BF16 instruction causes the execution circuitry to convert FP32 values from a source into BF16 values and store the BF16 values in data elements of a destination.

In some examples, retirement/write back circuitry 511 architecturally commits the destination register into the registers or memory 508 and retires the instruction.

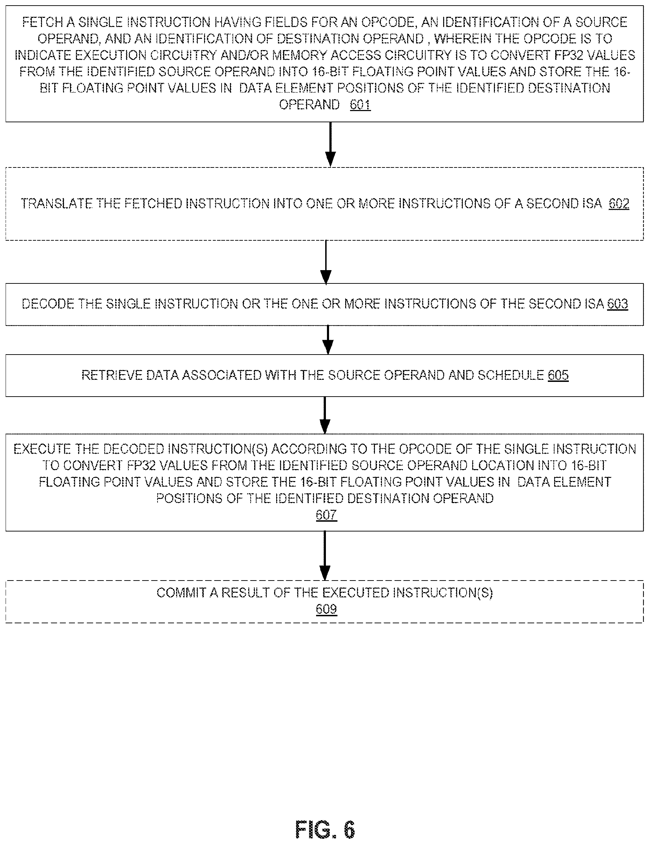

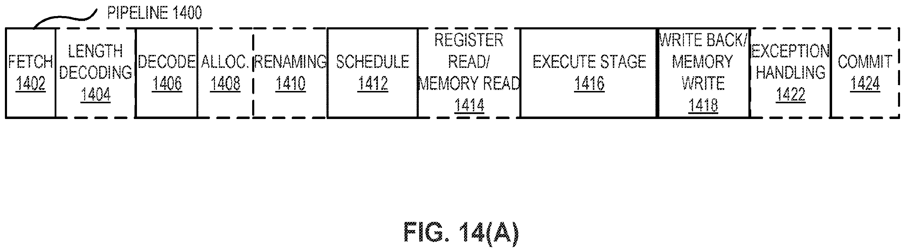

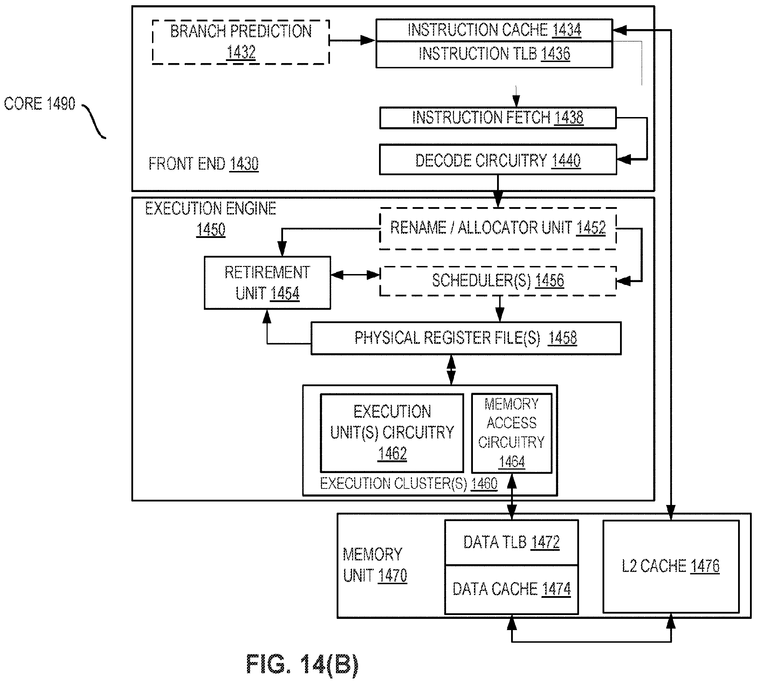

**FIG. 6** illustrates an example of method to process a VCVTNEPS2BF16 instruction. In some examples, a processor core as shown in FIG. 14(B), a pipeline as detailed below, etc. performs this method. In some examples, a processor core works with an emulation layer, or includes a binary translation circuit, to execute one or more instructions of a second, different instruction set architecture (ISA) to perform the operation(s) of the VCVTNEPS2BF16 instruction.

At 601, a single instruction having fields for an opcode, an identification of a source operand, and an identification o7f destination operand, wherein the opcode is to indicate execution circuitry and/or memory access circuitry is to convert FP32 values from the identified source operand into BF16 values and store the BF16 values in data element positions of the identified destination operand. The identification of operands may be to a register and/or a memory location.

In some examples, the fetched instruction of the first instruction set is translated into one or more instructions of a second instruction set architecture at 602.

The one or more translated instructions of the second instruction set are decoded at 603. In some examples, the translation and decoding are merged.

Data values associated with the source operand of the decoded instruction(s) is/are retrieved at 605 and the decoded instruction(s) scheduled. For example, when the source operand is a memory operand, the data from the indicated memory location is retrieved.

At 607, the decoded instruction, or decoded instruction(s) of the second instruction set, is/are executed by execution circuitry (hardware) such as that detailed herein. For the VCVTNEPS2BF16 instruction, the execution will cause execution circuitry to according to the opcode of the VCVTNEPS2BF16 instruction, convert FP32 values from the identified source operand into BF16 values and store the BF16 values in data element positions of the identified destination operand.

In some examples, the instruction is committed or retired at 609.

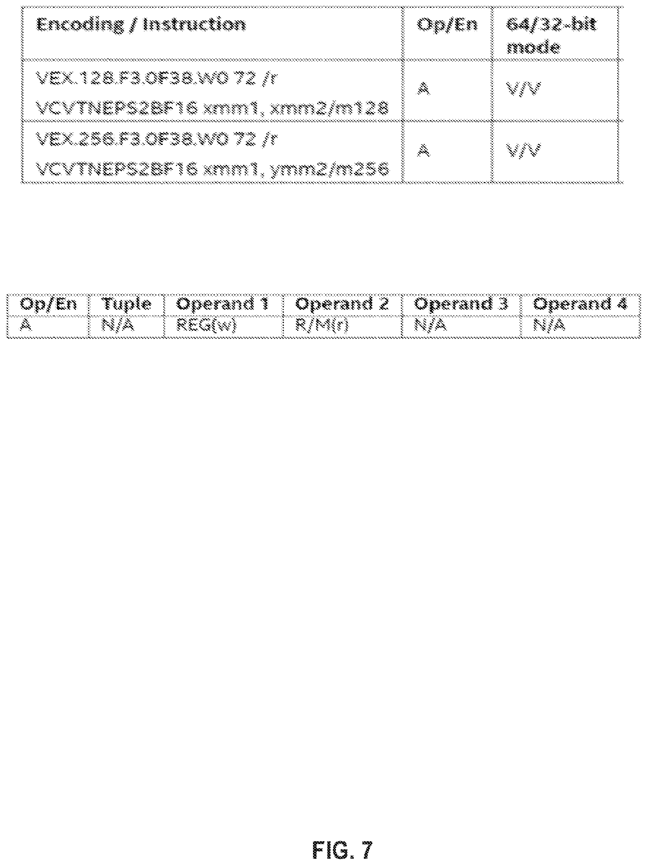

FIG. 7 illustrates examples of instruction encodings for the VCVTNEPS2BF16 instruction.

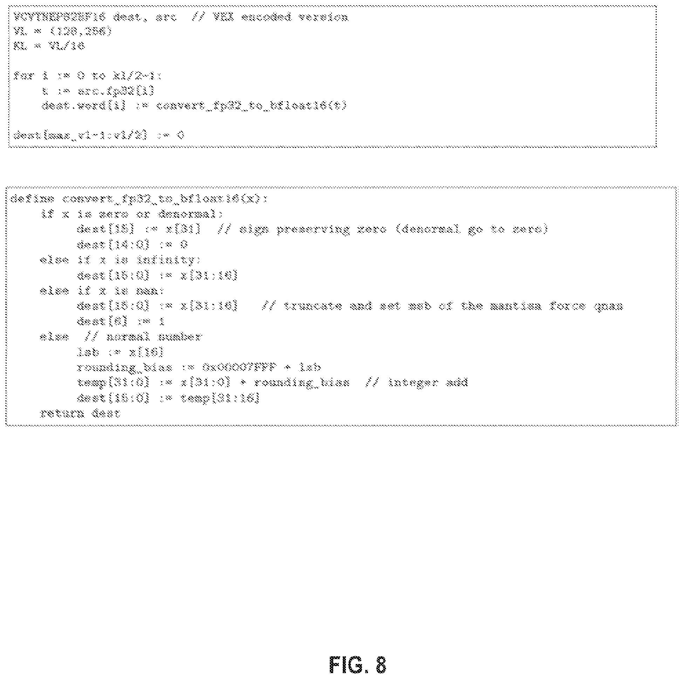

FIG. 8 illustrates examples of instruction pseudocode for the VCVTNEPS2BF16 instruction.

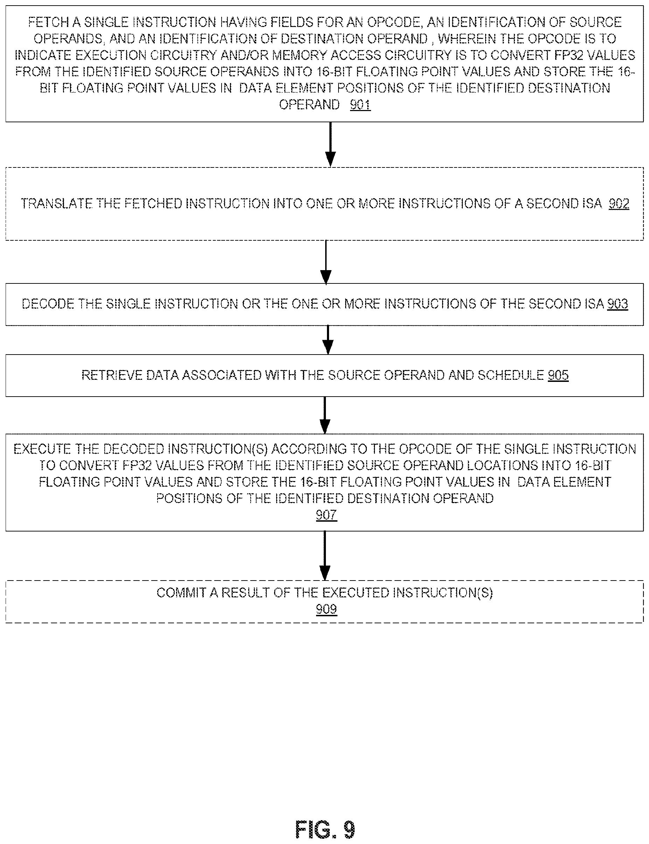

**FIG.** 9 illustrates an example of method to process a VCVTNE2PS2PH or VCVTNE2PS2BF16 instruction. In some examples, a processor core as shown in FIG. 14(B), a pipeline as detailed below, etc. performs this method. In some examples, a processor core works with an emulation layer, or includes a binary translation circuit, to execute one or more instructions of a second, different instruction set architecture (ISA) to perform the operation(s) of the VCVTNE2PS2PH or VCVTNE2PS2BF16 instruction. Note that the processing of a VCVTNE2PS2BF16 instruction is very similar, but that instead of FP16 values, BF16 values are generated.

At 901, a single instruction having fields for an opcode, an identification of a first source operand, an identification of a second source operand, and an identification of destination operand, wherein the opcode is to indicate execution circuitry and/or memory access circuitry is to convert FP32 values from the identified source operands into 16-bit floating point values (e.g., FP16 or BF16 depending on the opcode) and store the FP16 values in data element positions of the identified destination operand. In some examples, 16-bit floating point values converted from the second source operand are stored consecutively in the lower data element positions of the destination operand and the 16-bit floating point values converted from the first source operand are stored consecutively in the higher data element positions of the destination operand. In some examples, 16-bit floating point values converted from the first source operand are stored consecutively in the lower data element positions of the destination operand and the 16-bit floating point values converted from the second source operand are stored consecutively in the higher data element positions of the destination operand. The identification of operands may be to a register and/or a memory location.

In some examples, the fetched instruction of the first instruction set is translated into one or more instructions of a second instruction set architecture at 902.

The one or more translated instructions of the second instruction set are decoded at 903. In some examples, the translation and decoding are merged.

Data values associated with the source operand of the decoded instruction(s) is/are retrieved at 905 and the decoded instruction(s) scheduled. For example, when the source operand is a memory operand, the data from the indicated memory location is retrieved.

At 907, the decoded instruction, or decoded instruction(s) of the second instruction set, is/are executed by execution circuitry (hardware) such as that detailed herein. For the VCVTNE2PS2PH instruction, the execution will cause execution circuitry to according to the opcode of the VCVTNE2PS2PH instruction, convert FP32 values from the identified source operands into 16-bit floating point values and store the 16-bit floating point values in data element positions of the identified destination operand.

In some examples, the instruction is committed or retired at 909.

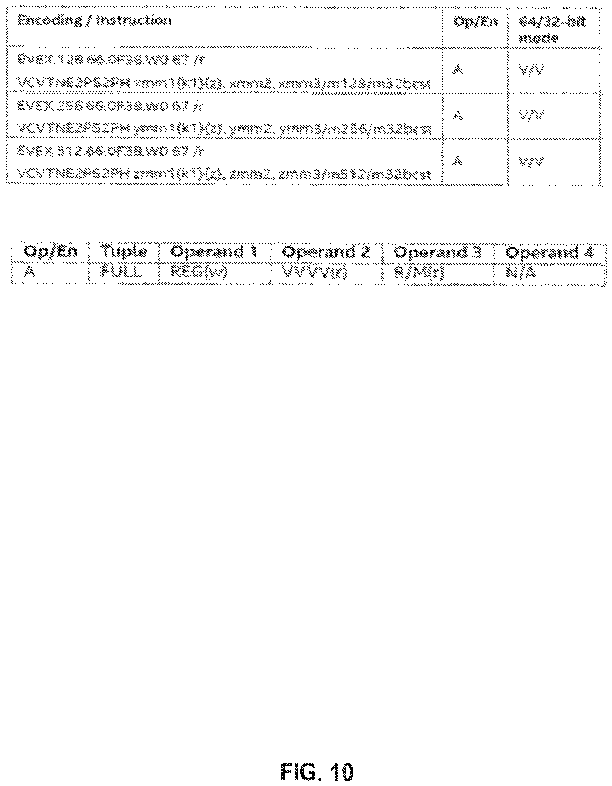

FIG. 10 illustrates examples of instruction encodings for the VCVTNE2PS2PH instruction.

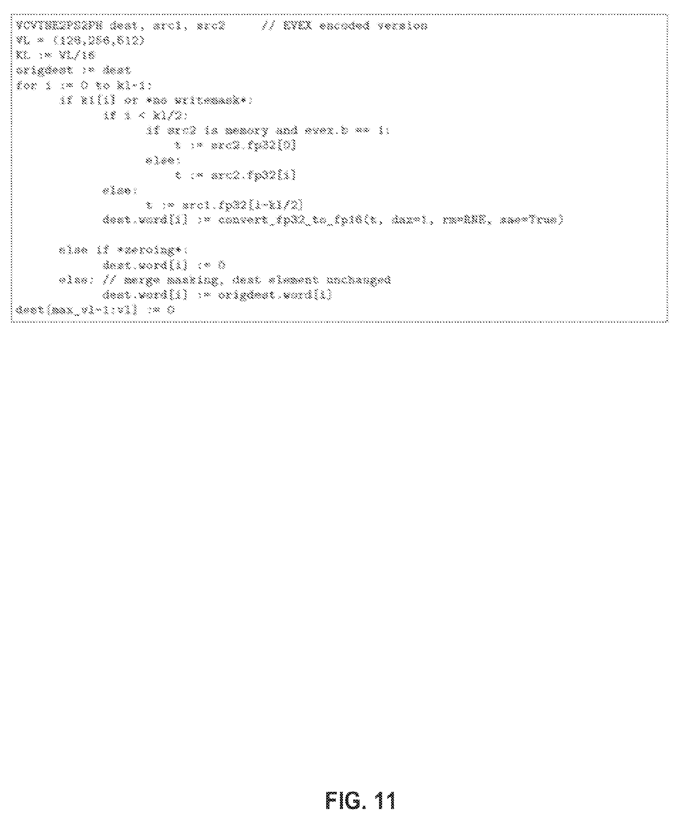

FIG. 11 illustrates examples of instruction pseudocode for the VCVTNE2PS2PH instruction.

Detailed below are examples of computer architectures, systems, cores, instruction formats, etc. that support one or more examples detailed above.

### Exemplary Computer Architectures

Detailed below are describes of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, handheld devices, and various other electronic devices, are also suitable. In general, a huge variety of systems or electronic devices capable of incorporating a processor and/or other execution logic as disclosed herein are generally suitable.

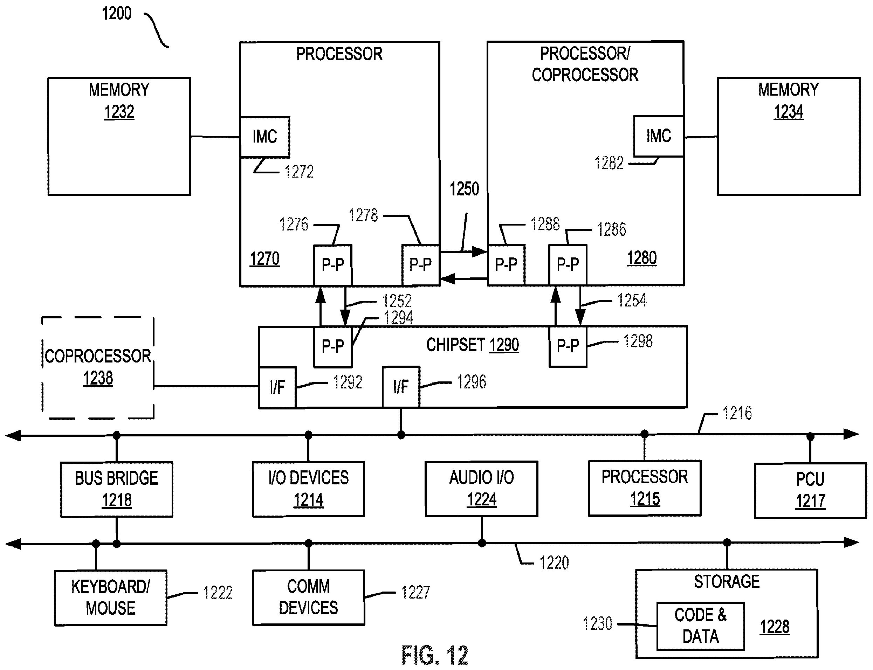

**FIG. 12** illustrates examples of an exemplary system. Multiprocessor system 1200 is a point-to-point interconnect system and includes a plurality of processors including a first processor 1270 and a second processor 1280 coupled via a point-to-point interconnect 1250. In some examples, the first processor 1270 and the second processor 1280 are homogeneous. In some examples, first processor 1270 and the second processor 1280 are heterogenous.

Processors 1270 and 1280 are shown including integrated memory controller (IMC) units circuitry 1272 and 1282, respectively. Processor 1270 also includes as part of its interconnect controller units point-to-point (P-P) interfaces 1276 and 1278; similarly, second processor 1280 includes P-P interfaces 1286 and 1288. Processors 1270, 1280 may exchange information via the point-to-point (P-P) interconnect 1250 using P-P interface circuits 1278, 1288. IMCs 1272 and 1282 couple the processors 1270, 1280 to respective memories, namely a memory 1232 and a memory 1234, which may be portions of main memory locally attached to the respective processors.

Processors 1270, 1280 may each exchange information with a chipset 1290 via individual P-P interconnects 1252, 1254 using point to point interface circuits 1276, 1294, 1286, 1298. Chipset 1290 may optionally exchange information with a coprocessor 1238 via a high-performance interface 1292. In some examples, the coprocessor 1238 is a special-purpose processor, such as, for example, a high-throughput MIC processor, a network or communication processor, compression engine, graphics processor, GPGPU, embedded processor, or the like.

A shared cache (not shown) may be included in either processor 1270, 1280 or outside of both processors, yet connected with the processors via P-P interconnect, such that either or both processors' local cache information may be stored in the shared cache if a processor is placed into a low power mode.

Chipset 1290 may be coupled to a first interconnect 1216 via an interface 1296. In some examples, first interconnect 1216 may be a Peripheral Component Interconnect (PCI) interconnect, or an interconnect such as a PCI Express interconnect or another I/O interconnect. In some examples, one of the interconnects couples to a power control unit (PCU) 1217, which may include circuitry, software, and/or firmware to perform power management operations with regard to the processors 1270, 1280 and/or co-processor 1238. PCU 1217 provides control information to a voltage regulator to cause the voltage regulator to generate the appropriate regulated voltage. PCU 1217 also provides control information to control the operating voltage generated. In various examples, PCU 1217 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1217 is illustrated as being present as logic separate from the processor 1270 and/or processor 1280. In other cases, PCU 1217 may execute on a given one or more of cores (not shown) of processor 1270 or 1280. In some cases, PCU 1217 may be implemented as a microcontroller (dedicated or general-purpose) or other control logic configured to execute its own dedicated power management code, sometimes referred to as P-code. In yet other examples, power management operations to be performed by PCU 1217 may be implemented externally to a processor, such as by way of a separate power management integrated circuit (PMIC) or another component external to the processor. In yet other examples, power management operations to be performed by PCU 1217 may be implemented within BIOS or other system software.

Various I/O devices 1214 may be coupled to first interconnect 1216, along with an interconnect (bus) bridge 1218 which couples first interconnect 1216 to a second interconnect 1220. In some examples, one or more additional processor(s) 1215, such as coprocessors, high-throughput MIC processors, GPGPU's, accelerators (such as, e.g., graphics accelerators or digital signal processing (DSP) units), field programmable gate arrays (FPGAs), or any other processor, are coupled to first interconnect 1216. In some examples, second interconnect 1220 may be a low pin count (LPC) interconnect. Various devices may be coupled to second interconnect 1220 including, for example, a keyboard and/or mouse 1222, communication devices 1227 and a storage unit circuitry 1228. Storage unit circuitry 1228 may be a disk drive or other mass storage device which may include instructions/code and data 1230, in some examples. Further, an audio I/O 1224 may be coupled to second interconnect 1220. Note that other architectures than the point-to-point architecture described above are possible. For example, instead of the point-to-point architecture, a system such as multiprocessor system 1200 may implement a multi-drop interconnect or other such architecture.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die as the described CPU (sometimes referred to as the application core(s) or application processor(s)), the above described coprocessor, and additional functionality. Exemplary core architectures are described next, followed by descriptions of exemplary processors and computer architectures.

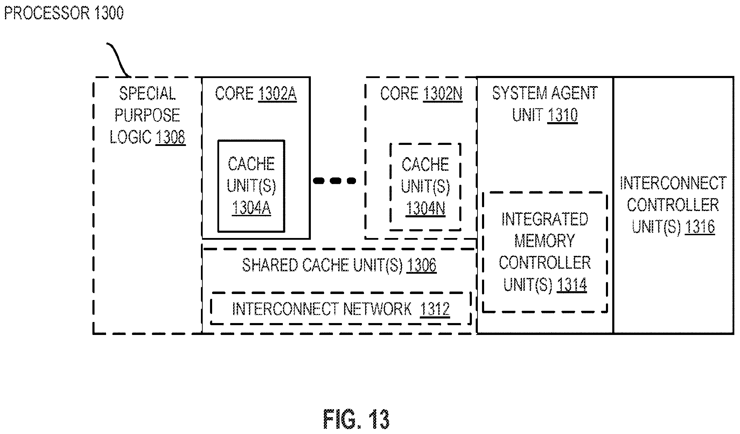

**FIG. 13** illustrates a block diagram of examples of a processor 1300 that may have more than one core, may have an integrated memory controller, and may have integrated graphics. The solid lined boxes illustrate a processor 1300 with a single core 1302A, a system agent 1310, a set of one or more interconnect controller units circuitry 1316, while the optional addition of the dashed lined boxes illustrates an alternative processor 1300 with multiple cores 1302(A)-(N), a set of one or more integrated memory controller unit(s) circuitry 1314 in the system agent unit circuitry 1310, and special purpose logic 1308, as well as a set of one or more interconnect controller units circuitry 1316. Note that the processor 1300 may be one of the processors 1270 or 1280, or co-processor 1238 or 1215 of FIG. 12.

Thus, different implementations of the processor 1300 may include: 1) a CPU with the special purpose logic 1308 being integrated graphics and/or scientific (throughput) logic (which may include one or more cores, not shown), and the cores 1302(A)-(N) being one or more general purpose cores (e.g., general purpose in-order cores, general purpose out-of-order cores, or a combination of the two); 2) a coprocessor with the cores 1302(A)-(N) being a large number of special purpose cores intended primarily for graphics and/or scientific (throughput); and 3) a coprocessor with the cores 1302(A)-(N) being a large number of general purpose in-order cores. Thus, the processor 1300 may be a general-purpose processor, coprocessor or special-purpose processor, such as, for example, a network or communication processor, compression engine, graphics processor, GPGPU (general purpose graphics processing unit circuitry), a high-throughput many integrated core (MIC) coprocessor (including 30 or more cores), embedded processor, or the like. The processor may be implemented on one or more chips. The processor 1300 may be a part of and/or may be implemented on one or more substrates using any of a number of process technologies, such as, for example, BiCMOS, CMOS, or NMOS.

A memory hierarchy includes one or more levels of cache unit(s) circuitry 1304(A)-(N) within the cores 1302(A)-(N), a set of one or more shared cache units circuitry 1306, and external memory (not shown) coupled to the set of integrated memory controller units circuitry 1314. The set of one or more shared cache units circuitry 1306 may include one or more mid-level caches, such as level 2 (L2), level 3 (L3), level 4 (L4), or other levels of cache, such as a last level cache (LLC), and/or combinations thereof. While in some examples ring-based interconnect network circuitry 1312 interconnects the special purpose logic 1308 (e.g., integrated graphics logic), the set of shared cache units circuitry 1306, and the system agent unit circuitry 1310, alternative examples use any number of well-known techniques for interconnecting such units. In some examples, coherency is maintained between one or more of the shared cache units circuitry 1306 and cores 1302(A)-(N).

In some examples, one or more of the cores 1302(A)-(N) are capable of multi-threading. The system agent unit circuitry 1310 includes those components coordinating and operating cores 1302(A)-(N). The system agent unit circuitry 1310 may include, for example, power control unit (PCU) circuitry and/or display unit circuitry (not shown). The PCU may be or may include logic and components needed for regulating the power state of the cores 1302(A)-(N) and/or the special purpose logic 1308 (e.g., integrated graphics logic). The display unit circuitry is for driving one or more externally connected displays.

The cores 1302(A)-(N) may be homogenous or heterogeneous in terms of architecture instruction set; that is, two or more of the cores 1302(A)-(N) may be capable of executing the same instruction set, while other cores may be capable of executing only a subset of that instruction set or a different instruction set.

### Exemplary Core Architectures

### In-order and out-of-order core block diagram

**FIG. 14(A)** is a block diagram illustrating both an exemplary in-order pipeline and an exemplary register renaming, out-of-order issue/execution pipeline according to examples. FIG. 14(B) is a block diagram illustrating both an exemplary example of an in-order architecture core and an exemplary register renaming, out-of-order issue/execution architecture core to be included in a processor according to examples. The solid lined boxes in **FIGS. 14(A)****-(B)** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **FIG. 14(A)****,** a processor pipeline 1400 includes a fetch stage 1402, an optional length decode stage 1404, a decode stage 1406, an optional allocation stage 1408, an optional renaming stage 1410, a scheduling (also known as a dispatch or issue) stage 1412, an optional register read/memory read stage 1414, an execute stage 1416, a write back/memory write stage 1418, an optional exception handling stage 1422, and an optional commit stage 1424. One or more operations can be performed in each of these processor pipeline stages. For example, during the fetch stage 1402, one or more instructions are fetched from instruction memory, during the decode stage 1406, the one or more fetched instructions may be decoded, addresses (e.g., load store unit (LSU) addresses) using forwarded register ports may be generated, and branch forwarding (e.g., immediate offset or an link register (LR)) may be performed. In one example, the decode stage 1406 and the register read/memory read stage 1414 may be combined into one pipeline stage. In one example, during the execute stage 1416, the decoded instructions may be executed, LSU address/data pipelining to an Advanced Microcontroller Bus (AHB) interface may be performed, multiply and add operations may be performed, arithmetic operations with branch results may be performed, etc.

By way of example, the exemplary register renaming, out-of-order issue/execution core architecture may implement the pipeline 1400 as follows: 1) the instruction fetch 1438 performs the fetch and length decoding stages 1402 and 1404; 2) the decode unit circuitry 1440 performs the decode stage 1406; 3) the rename/allocator unit circuitry 1452 performs the allocation stage 1408 and renaming stage 1410; 4) the scheduler unit(s) circuitry 1456 performs the schedule stage 1412; 5) the physical register file(s) unit(s) circuitry 1458 and the memory unit circuitry 1470 perform the register read/memory read stage 1414; the execution cluster 1460 perform the execute stage 1416; 6) the memory unit circuitry 1470 and the physical register file(s) unit(s) circuitry 1458 perform the write back/memory write stage 1418; 7) various units (unit circuitry) may be involved in the exception handling stage 1422; and 8) the retirement unit circuitry 1454 and the physical register file(s) unit(s) circuitry 1458 perform the commit stage 1424.

**FIG. 14(B)** shows processor core 1490 including front-end unit circuitry 1430 coupled to an execution engine unit circuitry 1450, and both are coupled to a memory unit circuitry 1470. The core 1490 may be a reduced instruction set computing (RISC) core, a complex instruction set computing (CISC) core, a very long instruction word (VLIW) core, or a hybrid or alternative core type. As yet another option, the core 1490 may be a special-purpose core, such as, for example, a network or communication core, compression engine, coprocessor core, general purpose computing graphics processing unit (GPGPU) core, graphics core, or the like.

The front end unit circuitry 1430 may include branch prediction unit circuitry 1432 coupled to an instruction cache unit circuitry 1434, which is coupled to an instruction translation lookaside buffer (TLB) 1436, which is coupled to instruction fetch unit circuitry 1438, which is coupled to decode unit circuitry 1440. In one example, the instruction cache unit circuitry 1434 is included in the memory unit circuitry 1470 rather than the front-end unit circuitry 1430. The decode unit circuitry 1440 (or decoder) may decode instructions, and generate as an output one or more micro-operations, micro-code entry points, microinstructions, other instructions, or other control signals, which are decoded from, or which otherwise reflect, or are derived from, the original instructions. The decode unit circuitry 1440 may further include an address generation unit circuitry (AGU, not shown). In one example, the AGU generates an LSU address using forwarded register ports, and may further perform branch forwarding (e.g., immediate offset branch forwarding, LR register branch forwarding, etc.). The decode unit circuitry 1440 may be implemented using various different mechanisms. Examples of suitable mechanisms include, but are not limited to, look-up tables, hardware implementations, programmable logic arrays (PLAs), microcode read only memories (ROMs), etc. In one example, the core 1490 includes a microcode ROM (not shown) or other medium that stores microcode for certain macroinstructions (e.g., in decode unit circuitry 1440 or otherwise within the front end unit circuitry 1430). In one example, the decode unit circuitry 1440 includes a micro-operation (micro-op) or operation cache (not shown) to hold/cache decoded operations, micro-tags, or micro-operations generated during the decode or other stages of the processor pipeline 1400. The decode unit circuitry 1440 may be coupled to rename/allocator unit circuitry 1452 in the execution engine unit circuitry 1450.

The execution engine circuitry 1450 includes the rename/allocator unit circuitry 1452 coupled to a retirement unit circuitry 1454 and a set of one or more scheduler(s) circuitry 1456. The scheduler(s) circuitry 1456 represents any number of different schedulers, including reservations stations, central instruction window, etc. In some examples, the scheduler(s) circuitry 1456 can include arithmetic logic unit (ALU) scheduler/scheduling circuitry, ALU queues, arithmetic generation unit (AGU) scheduler/scheduling circuitry, AGU queues, etc. The scheduler(s) circuitry 1456 is coupled to the physical register file(s) circuitry 1458. Each of the physical register file(s) circuitry 1458 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In one example, the physical register file(s) unit circuitry 1458 includes vector registers unit circuitry, writemask registers unit circuitry, and scalar register unit circuitry. These register units may provide architectural vector registers, vector mask registers, general-purpose registers, etc. The physical register file(s) unit(s) circuitry 1458 is overlapped by the retirement unit circuitry 1454 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1454 and the physical register file(s) circuitry 1458 are coupled to the execution cluster(s) 1460. The execution cluster(s) 1460 includes a set of one or more execution units circuitry 1462 and a set of one or more memory access circuitry 1464. The execution units circuitry 1462 may perform various arithmetic, logic, floating-point or other types of operations (e.g., shifts, addition, subtraction, multiplication) and on various types of data (e.g., scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1456, physical register file(s) unit(s) circuitry 1458, and execution cluster(s) 1460 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) unit circuitry, and/or execution cluster - and in the case of a separate memory access pipeline, certain examples are implemented in which only the execution cluster of this pipeline has the memory access unit(s) circuitry 1464). It should also be understood that where separate pipelines are used, one or more of these pipelines may be out-of-order issue/execution and the rest in-order.

In some examples, the execution engine unit circuitry 1450 may perform load store unit (LSU) address/data pipelining to an Advanced Microcontroller Bus (AHB) interface (not shown), and address phase and writeback, data phase load, store, and branches.

The set of memory access circuitry 1464 is coupled to the memory unit circuitry 1470, which includes data TLB unit circuitry 1472 coupled to a data cache circuitry 1474 coupled to a level 2 (L2) cache circuitry 1476. In one exemplary example, the memory access units circuitry 1464 may include a load unit circuitry, a store address unit circuit, and a store data unit circuitry, each of which is coupled to the data TLB circuitry 1472 in the memory unit circuitry 1470. The instruction cache circuitry 1434 is further coupled to a level 2 (L2) cache unit circuitry 1476 in the memory unit circuitry 1470. In one example, the instruction cache 1434 and the data cache 1474 are combined into a single instruction and data cache (not shown) in L2 cache unit circuitry 1476, a level 3 (L3) cache unit circuitry (not shown), and/or main memory. The L2 cache unit circuitry 1476 is coupled to one or more other levels of cache and eventually to a main memory.

The core 1490 may support one or more instructions sets (e.g., the x86 instruction set (with some extensions that have been added with newer versions); the MIPS instruction set; the ARM instruction set (with optional additional extensions such as NEON)), including the instruction(s) described herein. In one example, the core 1490 includes logic to support a packed data instruction set extension (e.g., AVX1, AVX2), thereby allowing the operations used by many multimedia applications to be performed using packed data.

### Exemplary Execution Unit(s) Circuitry

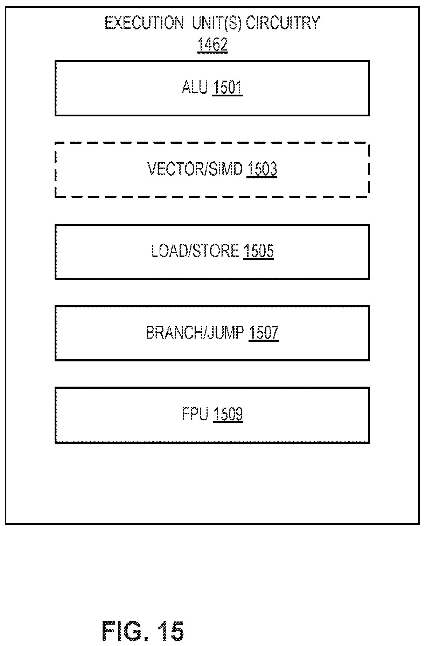

**FIG. 15** illustrates examples of execution unit(s) circuitry, such as execution unit(s) circuitry 1462 of FIG. 14(B). As illustrated, execution unit(s) circuity 1462 may include one or more ALU circuits 1501, vector/SIMD unit circuits 1503, load/store unit circuits 1505, and/or branch/jump unit circuits 1507. ALU circuits 1501 perform integer arithmetic and/or Boolean operations. Vector/SIMD unit circuits 1503 perform vector/SIMD operations on packed data (such as SIMD/vector registers). Load/store unit circuits 1505 execute load and store instructions to load data from memory into registers or store from registers to memory. Load/store unit circuits 1505 may also generate addresses. Branch/jump unit circuits 1507 cause a branch or jump to a memory address depending on the instruction. Floating-point unit (FPU) circuits 1509 perform floating-point arithmetic. The width of the execution unit(s) circuitry 1462 varies depending upon the example and can range from 16-bit to 1,024-bit. In some examples, two or more smaller execution units are logically combined to form a larger execution unit (e.g., two 128-bit execution units are logically combined to form a 256-bit execution unit).

### Exemplary Register Architecture

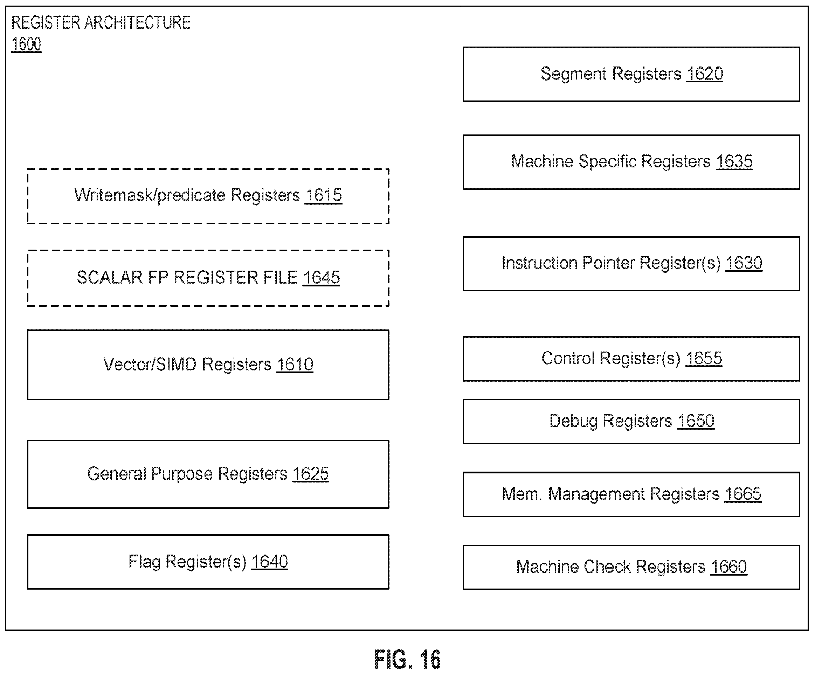

**FIG. 16** is a block diagram of a register architecture 1600 according to some examples. As illustrated, there are vector/SIMD registers 1610 that vary from 128-bit to 1,024 bits width. In some examples, the vector/SIMD registers 1610 are physically 512-bits and, depending upon the mapping, only some of the lower bits are used. For example, in some examples, the vector/SIMD registers 1610 are ZMM registers which are 512 bits: the lower 256 bits are used forYMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1600 includes writemask/predicate registers 1615. For example, in some examples, there are 8 writemask/predicate registers (sometimes called k0 through k7) that are each 16-bit, 32-bit, 64-bit, or 128-bit in size. Writemask/predicate registers 1615 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1615 corresponds to a data element position of the destination. In other examples, the writemask/predicate registers 1615 are scalable and consists of a set number of enable bits for a given vector element (e.g., 8 enable bits per 64-bit vector element).

The register architecture 1600 includes a plurality of general-purpose registers 1625. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 1600 includes scalar floating-point register 1645 which is used for scalar floating-point operations on 32/64/80-bit floating-point data using the x87 instruction set extension or as MMX registers to perform operations on 64-bit packed integer data, as well as to hold operands for some operations performed between the MMX and XMM registers.

One or more flag registers 1640 (e.g., EFLAGS, RFLAGS, etc.) store status and control information for arithmetic, compare, and system operations. For example, the one or more flag registers 1640 may store condition code information such as carry, parity, auxiliary carry, zero, sign, and overflow. In some examples, the one or more flag registers 1640 are called program status and control registers.

Segment registers 1620 contain segment points for use in accessing memory. In some examples, these registers are referenced by the names CS, DS, SS, ES, FS, and GS.

Machine specific registers (MSRs) 1635 control and report on processor performance. Most MSRs 1635 handle system-related functions and are not accessible to an application program. Machine check registers 1660 consist of control, status, and error reporting MSRs that are used to detect and report on hardware errors.

One or more instruction pointer register(s) 1630 store an instruction pointer value. Control register(s) 1655 (e.g., CR0-CR4) determine the operating mode of a processor (e.g., processor 1270, 1280, 1238, 1215, and/or 1300) and the characteristics of a currently executing task. Debug registers 1650 control and allow for the monitoring of a processor or core's debugging operations.

Memory management registers 1665 specify the locations of data structures used in protected mode memory management. These registers may include a GDTR, IDRT, task register, and a LDTR register.

Alternative examples may use wider or narrower registers. Additionally, alternative examples may use more, less, or different register files and registers.

### Instruction Sets

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down though the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an exemplary ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands.

### Exemplary Instruction Formats

Examples of the instruction(s) described herein may be embodied in different formats. Additionally, exemplary systems, architectures, and pipelines are detailed below. Examples of the instruction(s) may be executed on such systems, architectures, and pipelines, but are not limited to those detailed.

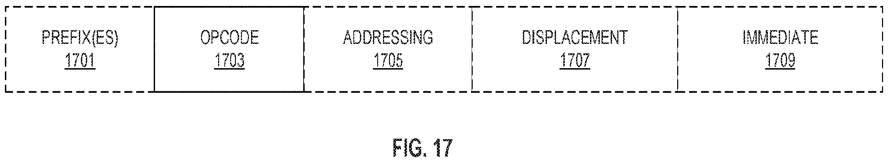

**FIG. 17** illustrates examples of an instruction format. As illustrated, an instruction may include multiple components including, but not limited to, one or more fields for: one or more prefixes 1701, an opcode 1703, addressing information 1705 (e.g., register identifiers, memory addressing information, etc.), a displacement value 1707, and/or an immediate 1709. Note that some instructions utilize some or all of the fields of the format whereas others may only use the field for the opcode 1703. In some examples, the order illustrated is the order in which these fields are to be encoded, however, it should be appreciated that in other examples these fields may be encoded in a different order, combined, etc.

The prefix(es) field(s) 1701, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1703 is used to at least partially define the operation to be performed upon a decoding of the instruction. In some examples, a primary opcode encoded in the opcode field 1703 is 1, 2, or 3 bytes in length. In other examples, a primary opcode can be a different length. An additional 3-bit opcode field is sometimes encoded in another field.

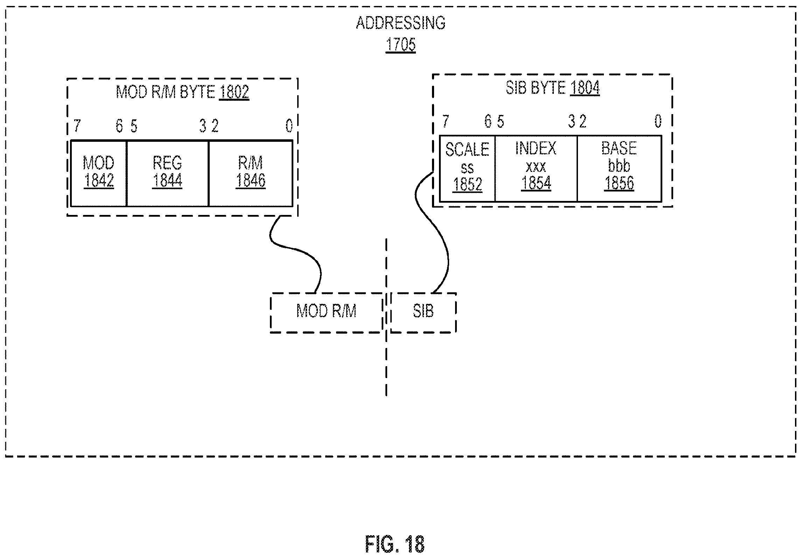

The addressing field 1705 is used to address one or more operands of the instruction, such as a location in memory or one or more registers. **FIG. 18** illustrates examples of the addressing field 1705. In this illustration, an optional ModR/M byte 1802 and an optional Scale, Index, Base (SIB) byte 1804 are shown. The ModR/M byte 1802 and the SIB byte 1804 are used to encode up to two operands of an instruction, each of which is a direct register or effective memory address. Note that each of these fields are optional in that not all instructions include one or more of these fields. The MOD R/M byte 1802 includes a MOD field 1842, a register field 1844, and R/M field 1846.

The content of the MOD field 1842 distinguishes between memory access and nonmemory access modes. In some examples, when the MOD field 1842 has a value of b11, a register-direct addressing mode is utilized, and otherwise register-indirect addressing is used.

The register field 1844 may encode either the destination register operand or a source register operand, or may encode an opcode extension and not be used to encode any instruction operand. The content of register index field 1844, directly or through address generation, specifies the locations of a source or destination operand (either in a register or in memory). In some examples, the register field 1844 is supplemented with an additional bit from a prefix (e.g., prefix 1701) to allow for greater addressing.

The R/M field 1846 may be used to encode an instruction operand that references a memory address, or may be used to encode either the destination register operand or a source register operand. Note the R/M field 1846 may be combined with the MOD field 1842 to dictate an addressing mode in some examples.

The SIB byte 1804 includes a scale field 1852, an index field 1854, and a base field 1856 to be used in the generation of an address. The scale field 1852 indicates scaling factor. The index field 1854 specifies an index register to use. In some examples, the index field 1854 is supplemented with an additional bit from a prefix (e.g., prefix 1701) to allow for greater addressing. The base field 1856 specifies a base register to use. In some examples, the base field 1856 is supplemented with an additional bit from a prefix (e.g., prefix 1701) to allow for greater addressing. In practice, the content of the scale field 1852 allows for the scaling of the content of the index field 1854 for memory address generation (e.g., for address generation that uses 2^{scale ∗} index + base).

Some addressing forms utilize a displacement value to generate a memory address. For example, a memory address may be generated according to 2^{scale ∗} index + base + displacement, index^{∗}scale+displacement, r/m + displacement, instruction pointer (RIP/EIP) + displacement, register + displacement, etc. The displacement may be a 1-byte, 2-byte, 4-byte, etc. value. In some examples, a displacement field 1707 provides this value. Additionally, in some examples, a displacement factor usage is encoded in the MOD field of the addressing field 1705 that indicates a compressed displacement scheme for which a displacement value is calculated by multiplying disp8 in conjunction with a scaling factor N that is determined based on the vector length, the value of a b bit, and the input element size of the instruction. The displacement value is stored in the displacement field 1707.

In some examples, an immediate field 1709 specifies an immediate for the instruction. An immediate may be encoded as a 1-byte value, a 2-byte value, a 4-byte value, etc.

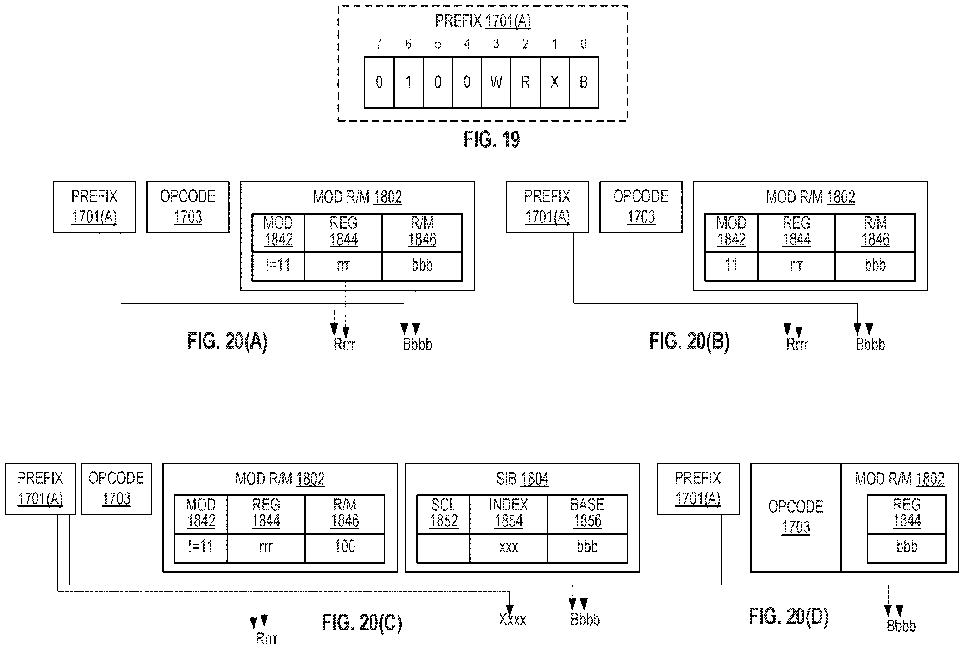

**FIG. 19** illustrates examples of a first prefix 1701(A). In some examples, the first prefix 1701(A) is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1701(A) may specify up to three registers using 3-bit fields depending on the format: 1) using the reg field 1844 and the R/M field 1846 of the Mod R/M byte 1802; 2) using the Mod R/M byte 1802 with the SIB byte 1804 including using the reg field 1844 and the base field 1856 and index field 1854; or 3) using the register field of an opcode.

In the first prefix 1701(A), bit positions 7:4 are set as 0100. Bit position 3 (W) can be used to determine the operand size, but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 1844 and MOD R/M R/M field 1846 alone can each only address 8 registers.

In the first prefix 1701(A), bit position 2 (R) may an extension of the MOD R/M reg field 1844 and may be used to modify the ModR/M reg field 1844 when that field encodes a general purpose register, a 64-bit packed data register (e.g., a SSE register), or a control or debug register. R is ignored when Mod R/M byte 1802 specifies other registers or defines an extended opcode.

Bit position 1 (X) X bit may modify the SIB byte index field 1854.

Bit position B (B) B may modify the base in the Mod R/M R/M field 1846 or the SIB byte base field 1856; or it may modify the opcode register field used for accessing general purpose registers (e.g., general purpose registers 1625).

**FIGS. 20(A)****-(D)** illustrate examples of how the R, X, and B fields of the first prefix 1701(A) are used. **FIG. 20(A)** illustrates R and B from the first prefix 1701(A) being used to extend the reg field 1844 and R/M field 1846 of the MOD R/M byte 1802 when the SIB byte 18 04 is not used for memory addressing. **FIG. 20(B)** illustrates R and B from the first prefix 1701(A) being used to extend the reg field 1844 and R/M field 1846 of the MOD R/M byte 1802 when the SIB byte 18 04 is not used (register-register addressing). **FIG. 20(C)** illustrates R, X, and B from the first prefix 1701(A) being used to extend the reg field 1844 of the MOD R/M byte 1802 and the index field 1854 and base field 1856 when the SIB byte 18 04 being used for memory addressing. **FIG. 20(D)** illustrates B from the first prefix 1701(A) being used to extend the reg field 1844 of the MOD R/M byte 1802 when a register is encoded in the opcode 1703.

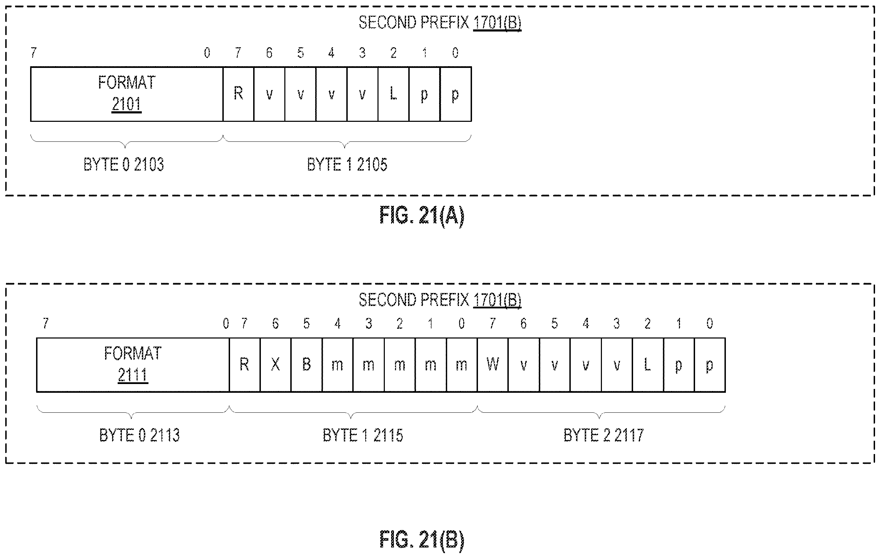

**FIGS. 21(A)****-(B)** illustrate examples of a second prefix 1701(B). In some examples, the second prefix 1701(B) is an example of a VEX prefix. The second prefix 1701(B) encoding allows instructions to have more than two operands, and allows SIMD vector registers (e.g., vector/SIMD registers 1610) to be longer than 64-bits (e.g., 128-bit and 256-bit). The use of the second prefix 1701(B) provides for three-operand (or more) syntax. For example, previous twooperand instructions performed operations such as A = A + B, which overwrites a source operand. The use of the second prefix 1701(B) enables operands to perform nondestructive operations such as A = B + C.

In some examples, the second prefix 1701(B) comes in two forms - a two-byte form and a three-byte form. The two-byte second prefix 1701(B) is used mainly for 128-bit, scalar, and some 256-bit instructions; while the three-byte second prefix 1701(B) provides a compact replacement of the first prefix 1701(A) and 3-byte opcode instructions.

**FIG. 21(A)** illustrates examples of a two-byte form of the second prefix 1701(B). In one example, a format field 2101 (byte 0 2103) contains the value C5H. In one example, byte 12105 includes a "R" value in bit[7]. This value is the complement of the same value of the first prefix 1701(A). Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vwv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1846 to encode the instruction operand that references a memory address or encode either the destination register operand or a source register operand.

Instructions that use this prefix may use the Mod R/M reg field 1844 to encode either the destination register operand or a source register operand, be treated as an opcode extension and not used to encode any instruction operand.

For instruction syntax that support four operands, vvvv, the Mod R/M R/M field 1846 and the Mod R/M reg field 1844 encode three of the four operands. Bits[7:4] of the immediate 1709 are then used to encode the third source register operand.

**FIG. 21(B)** illustrates examples of a three-byte form of the second prefix 1701(B). in one example, a format field 2111 (byte 0 2113) contains the value C4H. Byte 1 2115 includes in bits[7:5] "R," "X," and "B" which are the complements of the same values of the first prefix 1701(A). Bits[4:0] of byte 1 2115 (shown as mmmmm) include content to encode, as need, one or more implied leading opcode bytes. For example, 00001 implies a 0FH leading opcode, 00010 implies a 0F38H leading opcode, 00011 implies a leading 0F3AH opcode, etc.

Bit[7] of byte 2 2117 is used similar to W of the first prefix 1701(A) including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the Mod R/M R/M field 1846 to encode the instruction operand that references a memory address or encode either the destination register operand or a source register operand.

Instructions that use this prefix may use the Mod R/M reg field 1844 to encode either the destination register operand or a source register operand, be treated as an opcode extension and not used to encode any instruction operand.

For instruction syntax that support four operands, vvvv, the Mod R/M R/M field 1846, and the Mod R/M reg field 1844 encode three of the four operands. Bits[7:4] of the immediate 1709 are then used to encode the third source register operand.

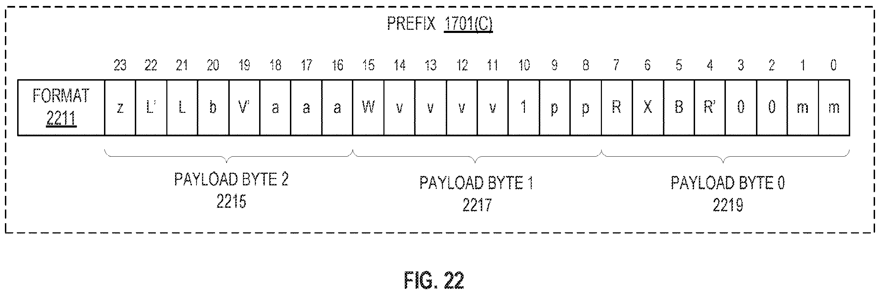

**FIG. 22** illustrates examples of a third prefix 1701(C). In some examples, the first prefix 1701(A) is an example of an EVEX prefix. The third prefix 1701(C) is a four-byte prefix.

The third prefix 1701(C) can encode 32 vector registers (e.g., 128-bit, 256-bit, and 512-bit registers) in 64-bit mode. In some examples, instructions that utilize a writemask/opmask (see discussion of registers in a previous figure, such as **FIG. 16**) or predication utilize this prefix. Opmask register allow for conditional processing or selection control. Opmask instructions, whose source/destination operands are opmask registers and treat the content of an opmask register as a single value, are encoded using the second prefix 1701(B).

The third prefix 1701(C) may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1701(C) is a format field 2211 that has a value, in one example, of 62H. Subsequent bytes are referred to as payload bytes 2215-2219 and collectively form a 24-bit value of P[23:0] providing specific capability in the form of one or more fields (detailed herein).

In some examples, P[1:0] of payload byte 2219 are identical to the low two mmmmm bits. P[3:2] are reserved in some examples. Bit P[4] (R') allows access to the high 16 vector register set when combined with P[7] and the ModR/M reg field 1844. P[6] can also provide access to a high 16 vector register when SIB-type addressing is not needed. P[7:5] consist of an R, X, and B which are operand specifier modifier bits for vector register, general purpose register, memory addressing and allow access to the next set of 8 registers beyond the low 8 registers when combined with the ModR/M register field 1844 and ModR/M R/M field 1846. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 1701(A) and second prefix 1711(B) and may serve as an opcode extension bit or operand size promotion.

P[18:16] specify the index of a register in the opmask (writemask) registers (e.g., writemask/predicate registers 1615). In one example, the specific value aaa = 000 has a special behavior implying no opmask is used for the particular instruction (this may be implemented in a variety of ways including the use of a opmask hardwired to all ones or hardware that bypasses the masking hardware). When merging, vector masks allow any set of elements in the destination to be protected from updates during the execution of any operation (specified by the base operation and the augmentation operation); in other one example, preserving the old value of each element of the destination where the corresponding mask bit has a 0. In contrast, when zeroing vector masks allow any set of elements in the destination to be zeroed during the execution of any operation (specified by the base operation and the augmentation operation); in one example, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Exemplary examples of encoding of registers in instructions using the third prefix 1701(C) are detailed in the following tables.

**Table 1: 32-Register Support in 64-bit Mode**

| | **4** | **3** | **[2:0]** | **REG. TYPE** | **COMMON USAGES** |
|---|---|---|---|---|---|
| **REG** | R' | R | ModR/M reg | GPR, Vector | Destination or Source |
| **VVVV** | V' | vvv | | GPR, Vector | 2nd Source or Destination |
| **RM** | X | B | ModR/M R/M | GPR, Vector | 1st Source or Destination |
| **BASE** | 0 | B | ModR/M R/M | GPR | Memory addressing |
| **INDEX** | 0 | X | SIB.index | GPR | Memory addressing |
| **VIDX** | V' | X | SIB.index | Vector | VSIB memory addressing |

**Table 2: Encoding Register Specifiers in 32-bit Mode**

| | **[2:0]** | **REG. TYPE** | **COMMON USAGES** |
|---|---|---|---|
| **REG** | ModR/M reg | GPR, Vector | Destination or Source |
| **VVVV** | vvw | GPR, Vector | 2^{nd} Source or Destination |
| **RM** | ModR/M R/M | GPR, Vector | 1^{st} Source or Destination |
| **BASE** | ModR/M R/M | GPR | Memory addressing |
| **INDEX** | SIB.index | GPR | Memory addressing |
| **VIDX** | SIB.index | Vector | VSIB memory addressing |

**Table 3: Opmask Register Specifier Encoding**

| | **[2:0]** | **REG. TYPE** | **COMMON USAGES** |
|---|---|---|---|
| **REG** | ModR/M Reg | k0-k7 | Source |
| **VVVV** | vvvv | k0-k7 | 2^{nd} Source |
| **RM** | ModR/M R/M | k0-7 | 1^{st} Source |
| **{k1]** | aaa | k0¹-k7 | Opmask |

Program code may be applied to input instructions to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

One or more aspects of at least one example may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

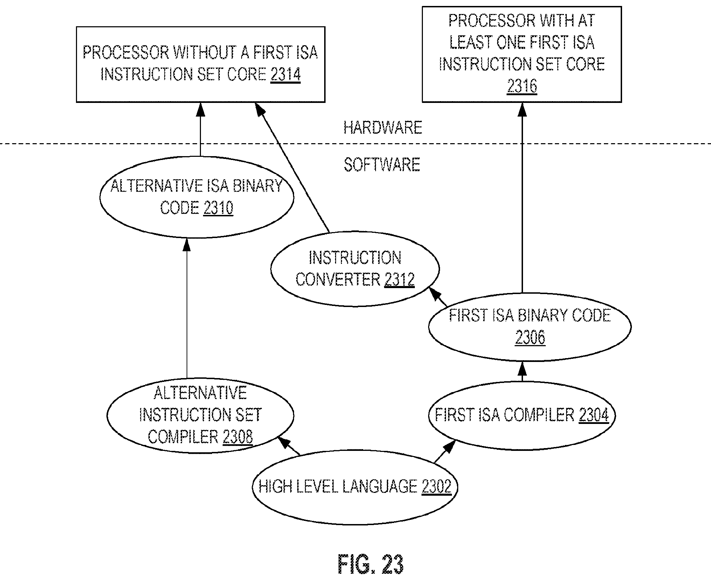

**FIG. 23** illustrates a block diagram contrasting the use of a software instruction converter to convert binary instructions in a source instruction set to binary instructions in a target instruction set according to examples. In the illustrated example, the instruction converter is a software instruction converter, although alternatively the instruction converter may be implemented in software, firmware, hardware, or various combinations thereof. FIG. 23 shows a program in a high-level language 2302 may be compiled using a first ISA compiler 2304 to generate first ISA binary code 2306 that may be natively executed by a processor with at least one first instruction set core 2316. The processor with at least one first ISA instruction set core 2316 represents any processor that can perform substantially the same functions as an Intel^{®} processor with at least one first ISA instruction set core by compatibly executing or otherwise processing (1) a substantial portion of the instruction set of the first ISA instruction set core or (2) object code versions of applications or other software targeted to run on an Intel processor with at least one first ISA instruction set core, in order to achieve substantially the same result as a processor with at least one first ISA instruction set core. The first ISA compiler 2304 represents a compiler that is operable to generate first ISA binary code 2306 (e.g., object code) that can, with or without additional linkage processing, be executed on the processor with at least one first ISA instruction set core 2316. Similarly, **FIG. 23** shows the program in the high-level language 2302 may be compiled using an alternative instruction set compiler 2308 to generate alternative instruction set binary code 2310 that may be natively executed by a processor without a first ISA instruction set core 2314. The instruction converter 2312 is used to convert the first ISA binary code 2306 into code that may be natively executed by the processor without a first ISA instruction set core 2314. This converted code is not likely to be the same as the alternative instruction set binary code 2310 because an instruction converter capable of this is difficult to make; however, the converted code will accomplish the general operation and be made up of instructions from the alternative instruction set. Thus, the instruction converter 2312 represents software, firmware, hardware, or a combination thereof that, through emulation, simulation or any other process, allows a processor or other electronic device that does not have a first ISA instruction set processor or core to execute the first ISA binary code 2306.

References to "one example," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Examples include, but are not limited to:
1. An apparatus comprising:
   decoder circuitry to decode a single instruction, the single instruction to include fields for an opcode, an identification of source operands, and an identification of destination operand, wherein the opcode is to indicate execution circuitry and/or memory access circuitry is to convert 32-bit floating point values from the identified source operands into 16-bit floating point values and store 16-bit floating point values in data element positions of the identified destination operand; and
   instruction processing circuitry to execute the decoded instruction according to the opcode.
2. The apparatus of example 1, wherein the fields for an identification of the source operands location is to identify two vector registers.
3. The apparatus of example 1, wherein the fields for an identification of the source operands location is to identify a memory location.
4. The apparatus of any of examples 1-3, wherein the 16-bit floating-point value is a BF16 value.
5. The apparatus of example 4, wherein to convert the 32-bit floating value to the BF16 floating point value, the instruction processing circuitry is to remove sixteen least significant zeros from the 32-bit floating point value.
6. The apparatus of any of examples 1-3, wherein the 16-bit floating-point value is a FP16 value.
7. A method comprising:
   translating an instance of a single instruction from a first instruction set to one or more instructions of a second, different instruction set, the single instruction to include fields for an opcode, an identification of source operands, and an identification of destination operand, wherein the opcode is to indicate execution circuitry and/or memory access circuitry is to convert 32-bit floating point values from the identified source operands into 16-bit floating point values and store 16-bit floating point values in data element positions of the identified destination operand; and
   executing the decoded instruction according to the opcode.
8. The method of example 7, wherein the fields for an identification of the source operands location is to identify two vector registers.
9. The method of example 7, wherein the fields for an identification of the source operands location is to identify a memory location.
10. The method of any of examples 7-9, wherein the 16-bit floating-point value is a BF16 value.
11. The method of example 10, wherein converting the 32-bit floating value to the BF16 floating point value comprises removing sixteen least significant zeros from the 32-bit floating point value.
12. The method of any of examples 7-9, wherein the 16-bit floating-point value is a FP16 value.
13. A system comprising:
   a memory to store an instance of single instruction, the single instruction to include fields for an opcode, an identification of source operands, and an identification of destination operand, wherein the opcode is to indicate execution circuitry and/or memory access circuitry is to convert 32-bit floating point values from the identified source operands into 16-bit floating point values and store 16-bit floating point values in data element positions of the identified destination operand;
   decoder circuitry to decode the instance of the single instruction; and
   instruction processing circuitry to execute the decoded instruction according to the opcode.
14. The system of example 13, wherein the fields for an identification of the source operands location is to identify two vector registers.
15. The system of example 13, wherein the fields for an identification of the source operands location is to identify a memory location.
16. The system of any of examples 13-15, wherein the 16-bit floating-point value is a BF16 value.
17. The system of example 16, wherein to convert the 32-bit floating value to the BF16 floating point value, the instruction processing circuitry is to remove sixteen least significant zeros from the 32-bit floating point value.
18. The system of any of examples 13-15, wherein the 16-bit floating-point value is a FP16 value.

Moreover, in the various examples described above, unless specifically noted otherwise, disjunctive language such as the phrase "at least one of A, B, or C" is intended to be understood to mean either A, B, or C, or any combination thereof (e.g., A, B, and/or C). As such, disjunctive language is not intended to, nor should it be understood to, imply that a given example requires at least one of A, at least one of B, or at least one of C to each be present.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
decoder circuitry to decode a single instruction, the single instruction to include fields for an opcode, an identification of source operands, and an identification of destination operand, wherein the opcode is to indicate execution circuitry and/or memory access circuitry is to convert 32-bit floating point values from the identified source operands into 16-bit floating point values and store 16-bit floating point values in data element positions of the identified destination operand; and
instruction processing circuitry to execute the decoded instruction according to the opcode.

2. The apparatus of claim 1, wherein the fields for an identification of the source operands locations are to identify two vector registers.

3. The apparatus of claim 1, wherein the fields for an identification of one of the source operands location is to identify a memory location.

4. The apparatus of any claims 1-3, wherein the 16-bit floating-point value is a BF16 value.

5. The apparatus of claim 4, wherein to convert the 32-bit floating value to the BF16 floating point value, the instruction processing circuitry is to remove sixteen least significant zeros from the 32-bit floating point value.

6. The apparatus of any of claims 1-3, wherein the 16-bit floating-point value is a FP16 value.

7. A method comprising:
translating an instance of a single instruction from a first instruction set to one or more instructions of a second, different instruction set, the single instruction to include fields for an opcode, an identification of source operands, and an identification of destination operand, wherein the opcode is to indicate execution circuitry and/or memory access circuitry is to convert 32-bit floating point values from the identified source operands into 16-bit floating point values and store 16-bit floating point values in data element positions of the identified destination operand; and
executing the decoded instruction according to the opcode.

8. The method of claim 7, wherein the fields for an identification of the source operands location are to identify two vector registers.

9. The method of claim 7, wherein the fields for an identification of the source operands location is to identify at least one memory location.

10. The method of any of claims 7-9, wherein the 16-bit floating-point value is a BF16 value.

11. The method of claim 10, wherein converting the 32-bit floating value to the BF16 floating point value comprises removing sixteen least significant zeros from the 32-bit floating point value.

12. The method of any of claims 7-11, wherein the 16-bit floating-point value is a FP16 value.

13. A computer program comprising instructions which, when the program is executed by a computer, cause the computer to carry out the method as claimed in any preceding claim.
